# EUROPEAN PATENT APPLICATION

(11) **EP 4 769 218 A1**
(43) Date of publication of application: **01.07.2026**
(21) Application number: 24223275.9
(22) Date of filing: 25.12.2024
(51) Int. Cl.: G06N 3/02, G06N 3/04, G06N 3/08, G06N 20/00, G06V 10/82, H04L 9/32, H04L 9/00

(54) **A COLLECTIVE, BLOCKCHAIN-BASED NEURAL NETWORK OPTIMIZATION SYSTEM AND METHOD**

(71) Applicant: Fibabanka Anonim Sirketi, 34394 Istanbul (TR); University of Jyväskylä, 40014 Jyväskylän (FI)
(72) Inventor: SAFAK, ILGIN, Ankara (TR); FRANTTI, TAPIO, Oulu (FI)
(74) Representative: Yamankaradeniz, Kemal

(57) **Abstract**

The invention particularly relates to a system and method that is used artificial intelligence, distributed computing, energy efficiency, optimization, cybersecurity, privacy field and relates to a decentralized system that not only optimizes neural networks for devices with varying capacities but also provides a robust defense mechanism against cybersecurity and privacy threats.

## Description

### Technical Field

The invention relates to a system and method that provides decentralized, collective, blockchain-based and device-specific approach to collectively optimizing neural network optimization.

The invention particularly relates to a system and method that is used artificial intelligence, distributed computing, energy efficiency, optimization, cybersecurity, privacy field and relates to a decentralized system that not only optimizes neural networks for devices with varying capacities but also provides a robust defense mechanism against cybersecurity and privacy threats.

### Present State of the Art

Neural network optimization plays a pivotal role in artificial intelligence (Al), focusing on improving the performance and efficiency of neural models by systematically adjusting their parameters and architecture. This discipline employs a variety of techniques, such as gradient descent, backpropagation, and hyperparameter tuning, to minimize the loss function, ultimately improving the model's accuracy and computational efficiency. The goal of optimization is to enhance the predictive power of neural networks, enabling them to process complex data more effectively. Traditionally, optimization has been performed in a centralized manner, where all computations and model training occur on a central node or server. Centralized optimization methods, while widely used, come with significant limitations, particularly when dealing with extensive deep learning tasks and large-scale datasets. One of the most pressing challenges in centralized systems is the high communication overhead required to transfer large volumes of data between the central server and other systems. Additionally, the central node itself often becomes a bottleneck, with its processing capacity constraining the overall speed and scalability of the training process. This constraint becomes more apparent as datasets continue to grow in size and complexity, making it increasingly difficult for centralized systems to manage the associated demands efficiently.

To overcome these limitations, researchers have turned to decentralized neural network optimization. In contrast to centralized systems, decentralized optimization distributes the computational load across multiple nodes, often located in different geographic regions. This approach facilitates parallel processing, where individual nodes work collaboratively on different parts of the problem, effectively reducing the computational burden on any single system. With decentralized optimization, the need for extensive data transmission is minimized, as each node can process data locally, communicating only the necessary results to others in the network. This reduces latency and eliminates the need for constant back-and-forth data transfers, which can slow down the training process in a centralized system. Moreover, the decentralized approach offers several advantages when handling dispersed datasets. Many real-world applications, such as those in healthcare, finance, or autonomous vehicles, generate vast amounts of data that are often scattered across different locations. Centralized systems struggle to handle such distributed data due to the prohibitive costs of moving and storing it in one central location. Decentralized neural network optimization solves this problem by allowing data to remain local, with individual nodes performing computations on their respective data subsets and only sharing key results. This strategy not only saves on communication costs but also enhances the privacy and security of sensitive data by keeping it within its local environment.

The key strength of decentralized neural network optimization lies in its ability to harness the combined computational power of a distributed network of nodes. By doing so, it mitigates the risks associated with single points of failure or bottlenecks, which are prevalent in centralized systems. Each node in a decentralized network works towards a common goal, sharing important information and contributing to the overall optimization process. This collaborative effort enhances the scalability and performance of the model, enabling AI and machine learning (ML) applications to better handle the growing scale of datasets and increasing complexity of tasks.

In recent years, significant progress has been made in decentralized neural network optimization, driven by advances in technologies such as federated learning and distributed machine learning frameworks. These innovations have paved the way for more efficient and scalable AI systems, capable of managing the demands of modern applications. As the complexity and scale of datasets continue to expand, decentralized optimization will remain crucial for enabling the development of more robust and efficient AI models. The continued evolution of decentralized approaches promises to improve not only the performance of machine learning models but also their ability to adapt to diverse and dynamic environments, further advancing the field of artificial intelligence.

In conclusion, while centralized optimization methods have served as the foundation for many successful AI applications, decentralized neural network optimization offers a powerful solution for tackling the challenges associated with big data and large-scale AI models. By leveraging distributed computing and reducing communication overhead, decentralized approaches are positioning themselves as key enablers of the next generation of AI and machine learning technologies.

In the present state of the art, there are a few approaches blockchain-based and device-specific approach to optimizing neural network and the following articles have been found: "Federated Learning of Neural Network Models with Heterogeneous Structures" [1]; "DiNNO: Distributed Neural Network Optimization for Multi-Robot Collaborative Learning" [2]; "Distributed Large Neural Network with Centralized Equivalence" [3]; "A framework for parallel and distributed training of neural networks. Neural Networks" [4]; "Enhancing Distributed Neural Network Training Through Node-Based Communications" [5]; "A Distributed Genetic Algorithm for Neural Network Design and Training. Complex Systems" [6]; "Minimizing Distribution Cost of Distributed Neural Networks in Wireless Sensor Networks" [7]; "Learning with Collaborative Neural Network Group by Reflection" [8]; "Collaborative Learning for Deep Neural Networks" [9].

In [1], a new federated learning method that combines information from different ML models using a weighted average ensemble is proposed. The method demonstrates similar performance to traditional training utilizing centralized datasets and surpasses six distinct optimization strategies, with the Tree Parzen Estimator (TPE) achieving the highest level of accuracy. However, model aggregation and neural network optimization is performed on a centralized server, therefore it is prone to single point of failures. Also, data integrity is not ensured with a Distributed Ledger Technology (DLT) system. Hence, the method mentioned in [1] does not provide a decentralized, blockchain-based and device-specific approach to collectively optimizing neural network structures.

[2] relates a distributed algorithm that facilitates a collective optimization of a deep neural network model by a collection of robots interacting via a mesh network. Each robot possesses an independent version of the neural network and only accesses its own data, thereby assuring data privacy and optimizing wireless bandwidth utilization. The approach requires each robot to optimize an augmented Lagrangian function, disseminate the resultant weights to neighboring robots, and repeatedly update dual variables until a consensus on network weights is achieved across all robots. The topology of the neural networks remains unchanged; the emphasis is on optimizing the parameters of the current models. This consensus is demonstrated to be a global optimum for convex objective functions. The approach is evaluated on multiple tasks, such as image classification, multi-robot implicit mapping, and multi-robot reinforcement learning, constantly surpassing current distributed deep learning methods and attaining validation loss comparable to centrally trained models. Hence, the structure of neural networks is not optimized, as it does not collectively optimize neural networks themselves. Furthermore, the algorithm mentioned in [2] fails to offer a decentralized, blockchain-based, and device-specific methodology for the collective optimization of neural network architectures.

In [3] mentioned that presents a distributed approach for training extensive neural networks across several nodes, yielding outcomes comparable to centralized training. The suggested approach utilizes a progressive learning network (PLN) architecture that is both extensive and profound. The training data is allocated among multiple nodes to accommodate situations where data cannot be centralized owing to volume or privacy issues. Significantly, an identical neural network model is employed at each node, guaranteeing uniformity throughout the distributed system. The methodology employs the alternating-direction-method-of-multipliers for distributed convex optimization, guaranteeing that the model parameters of each node converge to identical values as if the data were centralized. This method preserves the architecture and parameters of the neural network, offering a scalable option for large-scale neural network training. Hence, the structure of neural networks is not optimized. Also, the method mentioned in [3] does not provide a decentralized, blockchain-based and device-specific approach to collectively optimizing neural network structures.

In [4] mentioned that introduces a comprehensive framework for training neural networks in a distributed setting. Training data is distributed among various agents that interact over a sparse, possibly fluctuating network. The approach focuses on optimizing a non-convex social cost function, aggregating the local non-convex costs from each agent's dataset. The authors propose a solution using a convexification-decomposition method to address non-convexity and a dynamic consensus mechanism to disseminate knowledge across agents. The neural network model is uniform across all nodes, ensuring consistency within the distributed system. Each agent trains its local model with its specific data subset, maintaining uniform architecture and parameters across all agents. This framework accommodates diverse training criteria and regularization techniques, guaranteeing convergence to a stationary solution under lenient assumptions. Additionally, it enables each agent to parallelize its local optimization phase using multi-core architectures, making the approach both distributed and parallel. However, the method mentioned in [4] does not collectively optimize neural networks themselves, i.e., the structure of neural networks is not optimized. Also, the method mentioned in [4] does not provide a decentralized, blockchain-based and device-specific approach to collectively optimizing neural network structures.

In [5] mentioned that relates a node-centric optimization strategy to enhance the efficacy of distributed neural network training. The strategy markedly lowers the gradient interchange among model replicates while guaranteeing model convergence. This adaptable communication framework can be used into many general-purpose deep neural network (DNN) methods. The optimization evaluates the precise positioning of each duplicate within the platform, mitigating communication delay challenges that impede performance in distributed systems. The neural network model maintains consistency across all nodes, guaranteeing uniformity in the distributed system. The suggested method exhibits a decrease in global training duration and marginal enhancements in accuracy across diverse neural network techniques and datasets with varying characteristics. Hence, the structure of neural networks is not optimized, as in [5] does not collectively optimize neural networks themselves. Also, a decentralized, blockchain-based and device-specific approach to collectively optimizing neural network structures is not mentioned in [5].

In [6] mentioned that presents an innovative method for the design and training of neural networks through the application of a distributed genetic algorithm. This approach seeks the ideal architecture and weights of a neural network consisting of binary, linear threshold units. The genetic algorithm functions across numerous nodes, each processing a portion of the population and intermittently sharing information to facilitate convergence towards an ideal solution. Although the neural network model undergoes modifications during training, the identical architecture and parameters are employed across all nodes, hence maintaining consistency throughout the distributed system. This distributed method utilizes the parallel processing abilities of numerous nodes, improving the efficiency and scalability of neural network training. However, a blockchain-based and device-specific approach to collectively optimizing neural network structures is not used in [6].

In [7] mentioned that presents a strategy to reduce the distribution cost of neural networks within wireless sensor networks (WSNs). Distribution cost refers to the overall expenses associated with deploying and maintaining neural network models across sensor nodes, including energy consumption for communication, bandwidth for data transmission, and computational resources. The approach focuses on optimizing these factors to minimize costs while ensuring the same neural network model is used across all nodes, maintaining consistency within the distributed system. By leveraging efficient communication protocols and optimizing the placement of sensor nodes, the proposed strategy addresses the challenges of limited bandwidth and energy constraints typical in WSNs, providing a scalable solution for deploying neural networks in such environments. However, the collective optimization of the structure of neural networks is not studied in [7]. Also, a decentralized, blockchain-based and device-specific approach to collectively optimizing neural network structures is not mentioned in [7].

In [8] mentioned that presents an architecture including numerous neural networks that collaboratively address various tasks inside a unified learning system. This methodology develops from an individual neural network via a process termed reflection. Each neural network within the ensemble functions autonomously on designated tasks, however they cooperate to enhance overall efficacy. The proposed architecture facilitates several tactics tailored to distinct scenarios, hence improving the interpretability and efficiency of deep learning. The method attains superior accuracy with reduced training expenses, evidenced by a notable decrease in error rates and elevated accuracy in tasks such as MNIST digit classification. However, a decentralized, blockchain-based and device-specific approach to collectively optimizing neural network structures is not mentioned in [8].

In [9] mentioned that presents a method in which several classifier heads of a single neural network are concurrently trained on identical data to improve generalization and resilience to label noise without elevating inference costs. Classifier heads refer to multiple output layers attached to the same neural network. The neural network architecture remains the same across the network, since each classifier head shares the same intermediate-level representation and underlying network structure, ensuring consistency. This approach combines the advantages of auxiliary training, multi-task learning, and knowledge distillation. Two major mechanisms are implicated: The agreement among various classifier heads on identical data offers additional insights and regularization, enhancing generalization. Intermediate-level representation sharing with backpropagation rescaling consolidates gradient flows from all heads, thereby diminishing training computational cost and enhancing supervision for shared layers. However, a decentralized, blockchain-based and device-specific approach to collectively optimizing neural network structures is not mentioned in [9].

As a result of research in the literature, a US patent application with the application number "US11120102B2" and titled "Systems and methods of distributed optimization" has been found. The patent application relates to a system that offers techniques for establishing a global ML model that incorporates local updates from different user devices is described. The updates are calculated using data examples saved on the device, which are dispersed unevenly. This allows for aggregated updates to establish a global model. Hence, a federated learning system is described, where the local ML model feature set of each node is optimized centrally based on data availability of each node. The main drawback is that model optimization is performed centrally, which may be vulnerable to a single point of failures. Other drawbacks include the system not having a mechanism for ensuring data integrity, e.g., using a DLT, therefore it is also prone to data integrity threats. Also, the invention mentioned in US11120102B2 does not factor in other parameters such as device capabilities, device location, battery levels, etc. for the optimization of ML models. Hence, the invention mentioned in US11120102B2 does not perform a decentralized, collective optimization of the neural network structures using methods such as slimming, widening or adding layers.

As a result of the research in the literature, a US patent application with the application number "US20220344049A1" and titled "Decentralized artificial intelligence (ai)/machine learning training system" has been found. The patent application relates to a decentralized training platform employed to train AI models, wherein data is dispersed over various sites as a result of secrecy or regulatory considerations is described. The approach entails locally developing a teacher model at each node and subsequently transferring them to a central node for training on the transfer dataset. Inter-region peering connections can be utilized by cloud services to enable this. The platform has the capability to train several student models, resulting in the creation of an ensemble model. Weighting the loss function and under sampling nodes can enhance both accuracy and efficiency. Hence, the purpose is to share local ML models to create a global, collaborative ML model without sharing its training data for privacy purposes and perform distributed training on the shared ML models. However, the invention mentioned in US20220344049A1 does not perform a decentralized, collective optimization of the neural network structures based on device capabilities, device location, battery levels, etc. using methods such as slimming, widening or adding layers.

As a result of the research in the literature, a Taiwan patent application with the application number "TWI622940B" and titled "Method and apparatus for distributed and cooperative computation in artificial neural networks" has been found. The patent application relates to techniques for cooperative and distributed computation within a neural network is presented. Every individual unit in the system receives data from input neurons and synaptic weights and produces partial results. Cooperation in neural networks is accomplished by interconnecting processing units in a communicative manner. This interconnection enables the processing units to distribute the partial results among one or more additional processing units. These additional processing units utilize the shared partial results to produce a greater quantity of partial or final outcomes. Hence the invention mentioned in TWI622940B performs distributed processing but does not perform a decentralized, collective optimization of the neural network structures.

As a result of the research in the literature, a China patent application with the application number "CN111507601 B" and titled "Resource optimization allocation decision method based on deep reinforcement learning and block chain consensus" has been found. The patent application relates to an optimization method for resource allocation that combines deep reinforcement learning and blockchain consensus methods. Neural networks achieve cooperation through the implementation of a practical Byzantine fault-tolerant consensus mechanism. This method is utilized by consensus nodes to perform verification consensus on both blocks and transactions. The system utilizes an optimization technique to allocate data processing tasks among processing units and facilitate the sharing of partial results to generate the final results. However, the invention mentioned in CN111507601B does not perform a decentralized, collective optimization of the neural network structures.

As a result of the research in the literature, a US patent application with the application number "US11580321 B2" and titled "Systems, devices, and methods for machine learning using a distributed framework" has been found. The patent application describes a distributed framework for ML that enhances the efficiency of ML operations. This entails the selection of distant devices, the assessment of their confidence levels, and the allocation of ML tasks to them, including assigning a secure data storage task and a model-generation task. However, the invention mentioned in US11580321B2 does not perform a decentralized, collective optimization of the neural network structures.

As a result of the research in the literature, a US patent application with the application number "US11537892B2" and titled "Slimming of neural networks in machine learning environments" has been found. The patent application relates to a technique for reducing the size of neural networks in machine learning settings is described. The process entails acquiring knowledge of a primary neural network, examining channels, calculating scaling factors, and then refining it into a secondary network by pruning. A scaling factor is assigned to each channel, reflecting the level of importance inside the initial neural network. The technique also eliminates channels that have minimal relevance. However, only slimming of a neural network is described; widening, adding of layers and other optimization techniques are not considered. Additionally, the system does not include a collective or decentralized approach to neural network slimming.

As a result of the research in the literature, a US patent application with the application number "US11675998B2" and titled "System and method for performing small channel count convolutions in energy-efficient input operand stationary accelerator" has been found. The patent application relates to a system that produces numerous outputs for a layer of a neural network is described. The results are organized in an initial array, which is then compared to an array in the processing unit. The processor divides the initial array into smaller arrays, allocating a set of processing elements to each smaller array. The outputs are produced utilizing input data. However, their collective optimization, including the adding layers to or widening of neural networks, is not covered in the invention mentioned in US11675998B2.

As a result of the research in the literature, a US patent application with the application number "US20220036194A1" and titled "Deep neural network optimization system for machine learning model scaling" has been found. The patent application relates to methods for optimizing AI and ML models to decrease resource usage while enhancing performance is presented. A sparse distillation framework is designed to create models that are both parameter and compute-efficient for resource-constrained applications. The architecture incorporates a self-attention technique to enhance translational equivariance. However, only slimming of a neural network is performed; widening, adding of layers and other optimization techniques are not included. Additionally, the invention mentioned in US20220036194A1 does not include a collective or decentralized approach to neural network optimization.

As a result of the research in the literature, a US patent application with the application number "US10671564B2" and titled "Neural network unit that performs convolutions using collective shift register among array of neural processing units" has been found. The patent application relates to a neural network unit that comprises a primary memory for storing a data matrix and a secondary memory for storing a convolution kernel. Each neural processing unit (NPU) is equipped with a multiplexed register that receives elements from the first memory as well as the output of neighboring NPUs. An arithmetic unit carries out multiply aggregate operations on these outputs to accumulate convolutions of sub-matrices with the convolution kernel. The purpose is to improve the performance and efficiency of neural networks. However, widening, adding layers and other optimization techniques are not described. Additionally, invention mentioned in US10671564B2 does not perform a collective or decentralized approach to neural network optimization.

As a result of the research in the literature, a US patent application with the application number "US20230017304A1" and titled "Tool for facilitating efficiency in machine learning" has been found. The patent application relates to a method for efficiently allocating resources to deep learning autonomous machines is described. It offers an energy-aware communication library for neural network applications, reducing power and electricity consumption in data centers and clusters. This involves identifying data sets and implementing a library to optimize frequency scaling on a computing hardware, while maintaining high performance. However, only energy optimization of a neural network is described; widening, adding of layers and other optimization techniques are not considered. Additionally, the invention mentioned in US20230017304A1 does not perform a collective or decentralized approach to neural network optimization.

As a result of the research in the literature, a US patent application with the application number "US20220156554A1" and titled "Lightweight Decompositional Convolution Neural Network" has been found. The patent application relates to a neural network that utilizes a depth wise convolutional layer (DCL) and a compression-expansion (CE) module to generate feature outputs. The initial convolutional layer (CL) produces features with decreased dimensions, but the subsequent convolutional layer generates features with the original dimensions. The add operator produces features based on the second CL and DCL. This decreases the dimensions of the neural network and provides comparable performance to traditional lightweight deep neural networks. Hence, only a neural network slimming technique is described; widening, adding of layers and other optimization techniques are not considered. Additionally, the invention mentioned in US20220156554A1 does not include a collective or decentralized approach to neural network optimization.

As a result of the research in the literature, a US patent application with the application number "US11057318B1" and titled "Distributed artificial intelligence extension modules for network switches" has been found. The patent application describes a system that enhances distributed machine learning and computing systems with compute logic that is included in extension modules attached to network switches. This logic executes collective operations, such as reduction operations, on the computational data that is processed by the nodes of the system. During the collective phase, extension modules have the ability to assume control of the processing. The switch can be connected to many modules, with each module sharing intermediate results. However, these modules are not extended to network nodes other than network switches, including the collective optimization of neural networks across nodes.

As a result of the research in the literature, a US patent application with the application number "US9405348B2" and titled "System and method for managing energy consumption in a compute environment" has been found The patent application performs power cap processing in a compute environment. It assesses whether the allocated and dedicated resources for a task exceed a specified threshold value. If this is the case, the system interrupts the processing by transferring the task to alternative resources and takes measures to decrease power consumption. However, the invention mentioned in US9405348B2 does not utilize or optimize neural networks.

As a result of the research in the literature, a China patent application with the application number "CN107018184B" and titled "Distributed deep neural network cluster packet synchronization optimization method and system" has been found. The patent application relates to a method for optimizing packet synchronization in a distributed cluster of deep neural networks is proposed. The process entails the utilization of collaborative performance grouping, employing varying rates of learning, and employing asynchronous parallel methods. This approach minimizes the need for coordinating actions, optimizes the use of resources, and strengthens the process of reaching a common outcome. The utilization of the packet synchronization method greatly enhances the speed at which the model converges for parameter synchronization in isometric groups. However, the invention mentioned in CN107018184B does not collectively optimize neural networks themselves, i.e., the structure of neural networks is not optimized.

There are also several commercial products related to distributed model training, some of which are summarized below. However, none of these products provide mechanisms for collectively optimizing the structure of neural networks.

### Amazon SageMaker:

Amazon SageMaker facilitates distributed training via data parallelism and model parallelism. Data parallelism involves the replication of the identical neural network model across several nodes, with each node processing a distinct subset of the training data. The gradients calculated by each node are subsequently averaged and synchronized by techniques such as AIIReduce, which is a collective communication operation that reduces data across multiple nodes. In model parallelism, extensive models are distributed among several nodes, with each node managing a segment of the model. The model parallelism library of SageMaker automates the division and scheduling of model layers to enhance GPU utilization.

### Google Cloud AI Platform:

The Google Cloud AI Platform, now integrated into Vertex Al, provides distributed training functionalities. It employs a synthesis of data parallelism and parameter servers to oversee model parameters across several nodes. The platform utilizes the Reduction Server algorithm to improve the effectiveness of gradient aggregation, markedly decreasing training time through optimized bandwidth utilization. In data parallelism, an identical neural network model is employed across all nodes, while parameter servers manage the shared model state.

### NVIDIA DGX Systems:

NVIDIA DGX systems are engineered for high-performance distributed deep learning. They employ NVIDIA's NVLink (a high-bandwidth, low-latency interconnect technology) and NVSwitch (a network switch for connecting multiple GPUs) technology to deliver high-bandwidth, low-latency interconnections among GPUs. DGX systems accommodate both data parallelism and model parallelism, utilizing frameworks such as NVIDIA's NCCL (NVIDIA Collective Communications Library) to provide efficient communication among GPUs. In data parallelism, the identical neural network model is generally employed across nodes, whereas model parallelism entails distributing the model across GPUs.

### H2O.ai's AutoML:

The AutoML platform of H2O.ai features functionalities for the automated optimization of neural network architectures. It uses approaches such as hyperparameter optimization and model ensembling to identify the most effective model architectures. The platform may autonomously modify the architecture according to the data and the specific problem, guaranteeing optimal performance. H2O.ai AutoML predominantly functions on a centralized server for model training and optimization. It also utilizes distributed computing to improve scalability and performance. H2O.ai AutoML allocates tasks among clusters for collaborative optimization. Thus, it integrates centralized administration with distributed computation to efficiently optimize neural network models. However, it does not employ a device-specific or collaborative method for optimizing neural network models using blockchain technology.

As seen from the technical problems in the present state, a decentralized, collective, blockchain-based and device-specific approach is needed to collectively optimizing neural network optimization.

As a result, due to inadequacy of the solutions to meet above mentioned needs, it was necessary to make a development in the relevant technical field.

### The Purpose of the invention

The invention is inspired by present situations and aims to solve above mentioned disadvantages.

The main purpose of the invention is to provide decentralized, collective, blockchain-based and device-specific approach to collectively optimizing neural network optimization.

Another purpose of the invention is not only to optimize neural networks for devices with different capacities but also to provide a robust defense mechanism against cybersecurity and privacy threats.

The structural and characteristic features of the invention and all its advantages will be understood more clearly thanks to the figures given below and the detailed description written with reference to these figures and therefore the evaluation should be made considering these figures and detailed description.

### Figures to Help Understanding of the Invention

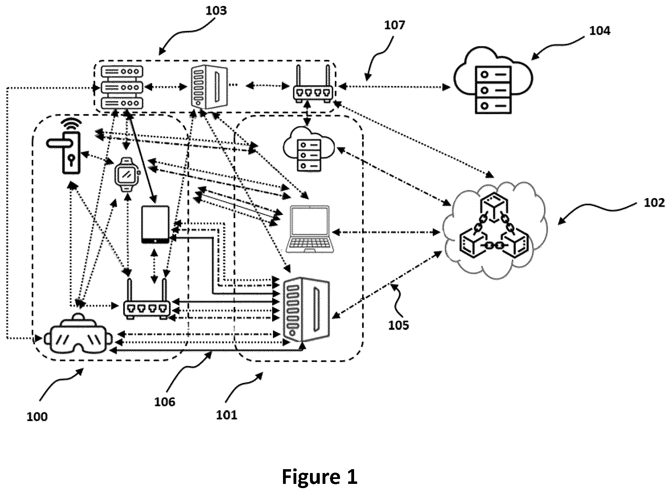

Figure 1 is a representative view of collective, blockchain-based neural network optimization system which is subject of the invention.

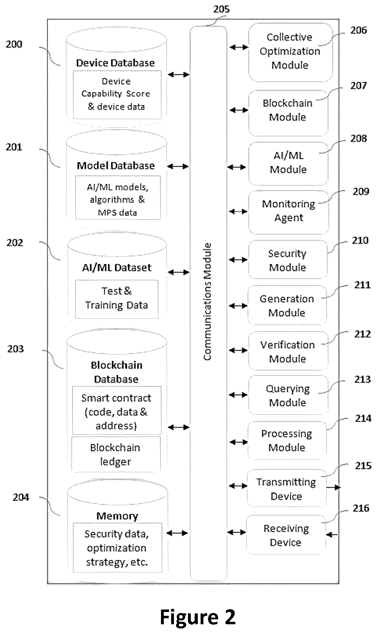

Figure 2 is a representative view of the system architecture of a blockchain node.
Figure 3 is a business flow of new global neural network model generation and distribution, and publishing updates to model optimization strategies.
Figure 4 is a blockchain structure of neural network optimization system.
Figure 5 is a representative view of neural network optimization strategies.
Figure 6 is a representative view of device-score block creation workflow at a blockchain node.

### References List

- 100.: Light node
- 101.: Blockchain node
- 102.: Blockchain network
- 103.: DID (Decentralized identifier) resolver
- 104.: DID (Decentralized identifier) registry
- 105.: Blockchain protocol
- 106.: AI protocol
- 107.: Data transmission protocol
- 200.: Device database
- 201.: Model database
- 202.: AI/ML dataset
- 203.: Blockchain database
- 204.: Memory
- 205.: Communications module
- 206.: Collective optimization module
- 207.: Blockchain module
- 208.: AI/ML module
- 209.: Monitoring agent
- 210.: Security module
- 211.: Generation module
- 212.: Verification module
- 213.: Querying module
- 214.: Processing module
- 215.: Transmitting device
- 216.: Receiving device

1001. Storing a blockchain ledger in the memory of a blockchain node
1002. Receiving data from light node(s) including at least model score(s) and/or decentralized identifier(s) (DID(s)) and device capability score(s) via blockchain protocol
1003. Checking the DID(s) against the decentralized identification registry
1004. If DID(s) is/are valid and a blockchain address is not yet assigned for the device, creating a new public, private key pair
1005. Storing the association between the DID(s) and blockchain address
1006. Provisioning the key pair to the relevant light node
1007. If DID(s) is/are valid and a blockchain address is already assigned, continue to next step
1008. Terminating connection with light node(s) if DID(s) is/are invalid
1009. Generating by the processing device of the blockchain node, a device block hash using at least a device capability score hash value included in the device block included in the most recent block
1010. Generating by the processing device of the blockchain node, a new device block including at least the generated device block hash
1011. Generating by the processing device of the blockchain node, a score block hash using at least a model score hash value included in the score block included in the most recent block
1012. Generating by the processing device of the blockchain node, a new score block including at least the generated score block hash
1013. Generating by the processing device of the blockchain node, a device-score block hash using at least a model score hash value included in the device-score block included in the most recent block
1014. Generating by the processing device of the blockchain node, a new device-score block including at least the generated device-score block hash
1015. Generating by the processing device of the blockchain node, a new block header, where generation of the new block header includes generating a new block hash value by hashing the most recent block, generating a new reference hash value by hashing the new device-score block hash
1016. Generating by the processing device of the blockchain node, a new block comprised of the new block header and the new device- score block
1017. Transmitting by a transmitter of the blockchain node, the generated new block to one or more participants associated with the blockchain

### Detailed Description of the Invention

The invention relates to a system and method that provides decentralized, collective, blockchain-based and device-specific approach to collectively optimizing neural network optimization.

The following elements are used in the invention:
Light node (100) is a computing device that can perform local model training, execute neural network optimization strategies locally, publish MPSs via a blockchain node (101), query MPSs and receive neural network updates, depending on the optimization strategy determined for their DCS, can depend on blockchain nodes (101) for information and validation functions, can participate in limited or no neural network training or optimization, and can submit their DCS and verify blockchain transactions by downloading block headers;
Blockchain node (101) is a computing device that manages all blockchain related activities by engages in the blockchain network (102), that can execute the blockchain's protocol software, verify blocks and transactions, and can guarantee the precision of the ledger, that can performs neural network training and optimization tasks, including aggregating local models received from light nodes (100), distributing global models to light nodes (100) and responding to requests received from light nodes (100), such as publishing their DCSs and MPSs on the ledger as of device, score and device-score blocks, which can retain all blockchain transactions on their computing device and uses a blockchain protocol (105) for all blockchain activity, including publishing new blocks, updating smart contract data and uses an AI protocol (106) for all AI related activity, including receiving local models and their scores for model aggregation and model distribution and can interact with other device in the network for other purposes using a data transmission protocol (107);
Blockchain network (102) is a decentralized database or ledger that is collectively maintained by the light nodes (100) and/or blockchain nodes (101) of a computer network. Its purpose is to keep a secure and decentralized ledger of transactions. Nodes in the network may be blockchain nodes (101) or light nodes (100), depending on their processing and storage capacities;
DID resolver (103) which connects to blockchain network (102) nodes including light nodes (100) and blockchain nodes (101) and to either resolve or verify a DID that was generated by the node using an accepted method. Blockchain network (102) nodes including light nodes (100) and blockchain nodes (101) connect to the DID resolver (103) to either resolve or verify a DID that was generated by the node using a method accepted by the resolver. The resolver retrieves the DID document, which includes crucial details including public keys, service endpoints, and verification mechanisms via the DID registry (104);
DID registry (104) which stores DID documents, which includes crucial details including public keys, service endpoints, and verification mechanisms and responds to DID resolver (103) requests;
Blockchain protocol (105) which defined set of rules that dictate the functioning of the blockchain network (102), including the definition of the data structure, transaction processing and verification rules, and communication between network nodes, including light nodes (100). The protocol guarantees the integrity, distribution, uniformity, and expandability of the blockchain;
AI protocol (106) that facilitates the collective training and optimization of AI/ML models (208) by several nodes while ensuring that the data remains decentralized and private. Only the modifications to the model such as weights, biases and MPSs are communicated with a blockchain node (101) for aggregation;
Data transmission protocol (107) which is a predefined set of rules that govern the process of transmitting data between various devices inside the blockchain network (102), that enables light nodes (100) to exchange information with each other and blockchain nodes (101), irrespective of any variations in their internal operations, composition, or configuration and that establishes the structure, timing, order, and error-detection techniques necessary for dependable and protected data interchange. This may include requesting to publish a DCS to the blockchain via a Blockchain Node (101), or non-blockchain related activity, e.g., using peer-to-peer communications;
Device database (200) in the blockchain node (101) server that stores device data, including at least DCS data;
Model database (201) in the blockchain node (101) server that stores model data including at least AI/ML models (208) and algorithms, optimization algorithms, MPSs, model parameters and hyperparameters, loss function and evaluation metrics;
AI/ML dataset (202) in the blockchain node (101) server that stores data needed for AI/ML model (208) training and optimization, including at least raw data, labeled data, test and training datasets;
Blockchain database (203) that comprises data related to blockchain transactions, including at least the Device-Score blockchain ledger, smart contract data including code, blockchain address and state information;
Memory (204) is that temporary storage of the blockchain node (101) server where data such as network data, optimization strategy data, security logs, etc. are stored;
Communications module (205), which is responsible for all internal communication on blockchain node (101);
Collective optimization module (206), which performs neural network optimization of neural network structures using a collection of optimization techniques and strategies, such as collective optimization strategies, feature optimization, pruning, quantization, knowledge distillation, adding layers, widening, re-training, meta-heuristic algorithms, stochastic gradient descent, adaptive gradient methods optimization algorithms;
Blockchain module (207), which manages all blockchain related activities, including at least the publishing and validation of device, score and device-score blocks, managing the smart contracts using a blockchain protocol (105);
AI/ML module (208), which performs all AI and data analytics activities in the system, including at least model generation and optimization, and anomaly detection and works together with the collective optimization module (206), security module (210) and monitoring agent (209);
Monitoring agent (209), which performs the real-time assessment of device and network resources and AI/ML model (208) performance and utilizes model performance metrics stored in the model database (201);
Security module (210), which performs all security and privacy related operations in the node by utilizing data obtained from the blockchain protocol (105), AI protocol (106) and data transmission protocol (107) via the receiving device (216) and transmitting device (215), including network traffic, blockchain and AI/ML model (208) data to identify and prevent model poisoning, thereby guaranteeing the authenticity and dependability of collaborative AI/ML model (208) optimization and training;
Generation module (211), which responsible for generating of new data, such as MPS, DCS, AI/ML models (208) or simulations and analysing data from the distributed ledger, local data stored on the node's database(s) 200-203, memory (204), incoming network traffic data, etc. while also ensuring compliance with the blockchain protocol (105), AI protocol (106) and data transmission protocol (107);
Verification module (212), which performs all verification functionalities in the system including data verification, request verification, user identity or device verification. Data verification includes data gathering, integration, verification, storing, provisioning, and presentation;
Querying module (213), which responsible for handling all queries including at least blockchain related requests from light nodes (100) and the blockchain node (101) internal requests, extracting pertinent data from databases and memory (204), and delivering the results back to the blockchain node (101);
Processing module (214), which performs all processing activities in the system, including data processing, image processing, etc.;
Transmitting device (215) is a device (e.g., NFC/RFID reader, API gateway, loT gateway, network router, switch, etc.) that transmits data to external systems; Receiving device (216) is a device (e.g., NFC/RFID reader, API gateway, loT gateway, network router, switch, etc.) that receives external signals sent to the node.

In this invention, a system and method for collectively optimizing neural networks for distributed AI/ML learning is presented. The distributed system dynamically adjusts neural network structures based on device-specific capacities, including battery levels, location, data processing and storage capabilities, security requirements, and available internet speed, etc. using optimization techniques and algorithms. One such embodiment of neural network optimization strategies are as follows:
- Devices that do not have sufficient processing power, battery life, storage capacity, low bandwidth, low data availability and/or data quality, slow internet speed or that are located far away from the rest of the network, hence have higher latency, do not participate in model training or optimization. However, they are able to identify themselves with a decentralized identifier (DID) and publish their device capability score (DCS) via a blockchain node (101), as well as verify other transactions. This helps identify and exclude these devices from the neural network optimization and training process. DIDs are globally unique identifiers that allow for the identification of an entity in a way that can be verified, is persistent, and does not rely on a centralized registry. DIDs provide a decentralized digital identity, commonly known as self-sovereign identity or decentralized identity.
- For devices that possess the bare minimum capacity required for model training, the neural networks are slimmed down to economize its energy expenditure and reduce its processing requirements. Additionally, a neural network may be slimmed if a larger structure is inefficient, based on performance results.
- For devices that have high processing power, high storage capacity, high data quality, high amounts of data availability, high speed internet, are closer to the network, sufficient battery life, etc. their neural networks are expanded by adding layers and/or widening the neural network.
- Devices with the highest capability aggregate other local models to obtain and train a global model, which are assigned as blockchain nodes (101). The new global model is distributed across the network if the new model has a higher model performance score (MPS) than others in the network. The performance of the neural networks across the network are continuously monitored by blockchain nodes (101), and the neural network structures of the nodes are optimized dynamically and collectively. A blockchain nodes (101) uses AI algorithms, statistical methods, etc. to perform data analytics on historical blockchain ledger data, real-time blockchain transaction data, network traffic data, etc. to gain insights about the performance of model optimization strategies. For example, for a device capability range between 0 and 100, 0 denoting a device that has the lowest computational capability and 100 denoting a device with the highest computational capability, an analysis may reveal that widening the model at a node with a DCS of, e.g., 60 degrades the model performance, and that hyper-parameter optimization is a better strategy. Accordingly, the blockchain node (101) may update the model optimization strategy by publishing a new smart contract. The new smart contract is deployed only after other blockchain nodes (101) in the network verify it as a consensus. This could be achieved, e.g., by a voting mechanism using governance tokens: when a blockchain node (101) that is a token holder verifies the new strategy, e.g., by performing similar data analytics operations, it votes in favor of the new smart contract. If sufficient votes are collected, the new smart contract is deployed. Otherwise, it is rejected, and the existing smart contract remains valid.

Nodes engage in communication with signaling and data traffic, as well as AI traffic and the blockchain, in order to communicate and transmit model and other pertinent information to each other. This is accomplished through the utilization of an AI protocol (106) in conjunction with a blockchain protocol (105). Blockchain technology is used for coordinating and validating the neural network optimization process by sharing model performance scores, devices capability scores and optimization strategies across the network, ensuring transparency, security, and scalability. Devices publish their DCSs and model performance scores on a blockchain ledger, which is utilized by a smart contract as input data in determining the optimization strategy. Smart contracts are used for automating the distributed execution of optimization strategies. A method such as federated learning is used for aggregating models, where MPSs are utilized as weights. This allows sharing model data without compromising data privacy, enhancing both the model performance, privacy and security.

The novelty and main functionalities of a system and method that provides decentralized, collective, blockchain-based and device-specific approach to collectively optimizing neural network optimization which is subject of the invention:
- A flexible, automated and robust solution for decentralized neural network optimization that can be applied to a wide range of devices.
- A secure and scalable blockchain-based architecture for enabling collective neural network optimization and distributed learning in distributed networks.
- The architecture is designed to meet the resource and power constraints of different devices in the networks.
- The usage of blockchain technology and smart contracts allows the collective governance and execution of device-specific neural network optimization strategies in a distributed environment in real-time.
- The neural network optimization strategy is continuously and collectively optimized by sharing model performance scores and DCSs via the blockchain network (102). Blockchain nodes (101) use this data to determine the appropriate strategies that optimize the global and local models using data analytics.
- Smart contracts are utilized for the automated execution of model optimization strategies across the network. New model optimization strategies are agreed upon as a consensus, which are published in a new smart contract by a blockchain node (101). The blockchain network (102) votes on the new smart contact, which is deployed if sufficient votes are received. Otherwise, the new smart contract is rejected.
- Blockchain nodes (101) aggregate local models to obtain new global models using a privacy-preserving method such as federated learning, where MPSs are utilized as weights in obtaining the ensemble model. A global model that has a higher score compared to the network is distributed across the network by the blockchain node (101).
- Optionally, an explainable version of the global model is also created and published, e.g., for regulatory compliance and/or audit purposes.
- A blockchain protocol (105) is used for blockchain transactions. This includes sharing and publishing of DCSs, MPSs and model optimization strategy updates to the smart contract.
- An AI protocol (106) is used for sharing model data, including neural network structures and their model performance scores, across the network based on the device capability for federated learning.
- A data transmission protocol (107) is used for communicating and data sharing between network nodes. This includes obtaining and sharing a decentralized identifier by a node for joining and interacting with the network.

In this invention, the following terms are used synonymously:
- AI/ML model (208), neural network model, model,
- Device, computing device, electronic device, computer, tablet, mobile device, mobile phone, smart watch etc.
- Node, network node.

The device used in the invention can be a mobile phone, tablet, computer, smart watch, server, database, etc. Our invention can be used in all electronic and smart devices.

The invention pertains to artificial intelligence, distributed computing, energy efficiency, optimization, cybersecurity, and privacy. It addresses the need for a decentralized system that not only optimizes neural networks for devices with varying capacities but also provides a robust defense mechanism against cybersecurity and privacy threats. Existing solutions do not adequately address the need for a decentralized and adaptive approach that can operate across a network of devices with different capacities.

The disclosed system presents a blockchain-based, collective, device-specific, secure and dynamic neural network optimization methods and system. The invention includes the following methods and systems:
- A secure, collective, decentralized and device-specific method for dynamically optimizing the performance (e.g., with feature selection, hyper-parameter tuning, re-training and optimization techniques) and complexity (e.g., thinning, adding layers, widening layers) of neural networks based on device-specific assessments and model performance.
- A blockchain network (102), for enhanced security, ensuring data integrity, elimination of single point of failures, and transparency and collective management of neural network optimization strategies for federated learning with heterogeneous neural network structures.
- Distributed AI / ML model learning, where each device performs model optimization and training locally on its own AI/ML model (208) based on its capabilities.
- A method for collectively optimizing neural network model optimization strategies for the dynamic adjustment of neural network complexity and the continuous optimization of neural networks through data sharing using smart contracts via the blockchain network (102).
- A monitoring agent (209) on each device for the real-time assessment of device and network resources and AI/ML model (208) performance.

System components of the invention include the following:
- **A blockchain network** (102), where registered devices in the network may be blockchain nodes (101) or light nodes (100).
   - **Light nodes** (100) may perform local model training, execute neural network optimization strategies locally, publish MPSs via a blockchain node (101), query MPSs and receive neural network updates, depending on the optimization strategy determined for their DCS. They depend on blockchain nodes (101) for information and validation functions. Nodes with low DCSs may participate in limited or no neural network training or optimization and can submit their DCS and verify blockchain transactions by downloading block headers. Hence, may support a subset of the functionalities of a blockchain node (101).
   - **Blockchain nodes** (101) perform model training and neural network optimization tasks including calculation and distribution of new global neural network models and their scores and updating of model optimization strategies. These nodes retain all blockchain transactions on their machines. They verify blocks and transactions, guaranteeing the precision of the ledger.
   - **A blockchain ledger** for recording and validating the neural network MPSs and DCSs using a blockchain protocol (105). This helps match devices with the relevant optimization strategy.
   - **Smart contracts** for collectively managing neural network optimization strategies using a blockchain consensus protocol and voting mechanism.
- **An AI protocol** (106), for sharing AI/ML model (208) data between nodes in the network.
- **A blockchain protocol** (105) for performing blockchain transactions such as publishing or validating a block, updating a smart contract, etc.
- **A data transmission protocol** (107), for resolving a DID, peer-to-peer data exchange, requesting to publish data on the blockchain, etc.
- **A decentralized identifier (DID) resolver** for resolving decentralized identifiers
- **A DID registry** (104) for storing and retrieving DID documents. This may be implemented using a distributed database system including DLT such as blockchain technology.

The blockchain node (101) comprising a collective optimization module (206) that has the following functionalities:
**Collective optimization module** (206): Performs model optimization and manages model optimization strategies, and includes a collection of optimization techniques and strategies which includes, but is not limited to, the individual of hybrid usage of the following methods, techniques and algorithms:
- Collective Optimization Strategies: Rules for implementing optimization algorithms, methods and techniques collectively.
- Feature Optimization: In neural networks, feature optimization refers to modifying the input features in order to enhance the model's performance. Feature extraction, feature selection, and feature scaling may be involved in this.
- Pruning: Involves decreasing the quantity of neurons or connections in the neural network that have a negligible effect on performance. This is accomplished via methods such as weight pruning, which involves eliminating connections with weights that fall below a specific threshold.
- Quantization: Refers to the process of decreasing the level of precision of a neural network's parameters. For instance, the process of transforming 32-bit floating-point quantities into 16-bit representations can greatly decrease the size of the model while maintaining a little decrease in accuracy.
- Knowledge Distillation: Involves training a smaller "student" network to imitate the behavior of a bigger "teacher" network. The student network preserves the fundamental knowledge while reducing the level of intricacy.
- Adding layers: Increasing the depth of the neural network can be achieved by adding additional layers. This has the potential to capture more intricate characteristics in the data.
- Widening: The neural network can be expanded by increasing the number of neurons in each layer, potentially enhancing the neural network's ability to learn.
- Re-training: When additional data is obtained by a node, it has the ability to enhance its performance by retraining its local model using the larger dataset, all while keeping its structure unchanged.
- Meta-heuristic algorithms:
   ▪ Artificial Bee Colony (ABC): Draws inspiration from the intelligent behavior exhibited by honeybee swarms. It replicates the food gathering behavior of honeybee colonies. Within the framework of training neural networks, the location of a food source denotes a potential solution to the optimization issue, while the quantity of nectar connected with a food source indicates the quality or fitness of the answer.
   ▪ Genetic Algorithm (GA): Used to evolve network designs by employing selection, crossover, and mutation.
   ▪ Particle Swarm Optimization (PSO): A technique that simulates the social behavior of swarms in order to alter hyperparameters.
   ▪ Backtracking Search Algorithm (BSA): An evolutionary algorithm specifically designed for solving global optimization problems. Backtracking is a computational strategy that is used to find solutions to problems, particularly constraint satisfaction problems. It involves systematically selecting and testing potential solutions and discarding any candidate that cannot be extended to a valid solution.
   ▪ Whale Optimization Algorithm (WOA): A technique that imitates the hunting behavior of humpback whales in order to optimize network weights.
   ▪ Lightning Search Algorithm (LSA): Inspired from the natural occurrence of lightning and the process of step leader propagation. It employs rapid particles referred to as projectiles. These projectiles constitute the initial population of the leader, consisting of the projectiles that aspire to become a leader, as well as the leading projectile.
- Stochastic Gradient Descent (SGD): A highly effective method for training linear classifiers using convex loss functions, such as Support Vector Machines and Logistic Regression.
- Adaptive Gradient Methods: Techniques such as Adagrad, Adadelta, and RMSprop adjust the learning rate for each parameter, enhancing the rate at which the model converges. They employ an automatic mechanism to decrease the learning rate for parameters that exhibit significant gradients, hence reducing divergence.

### Modes of operation:

- The system operates in a fully decentralized manner, with devices independently running optimization algorithms.
- Devices that participate in the blockchain network (102) execute, verify and manage smart contracts to reach a consensus on neural network structures and model optimization strategies. Smart contracts govern the execution of neural network optimization techniques.
- A method such as federated learning can be integrated to allow for collaborative training and AI/ML model (208) optimization across devices, with each local model being optimized before aggregation. Federated learning allows for the pooling of insights from diverse sources without exposing sensitive data. The federated learning process is enhanced with blockchain technology for ensuring data integrity.
- Optimization algorithms can be used to dynamically adjust the complexity of neural networks per device and network data, where the system adapts to the devices' battery levels, location, processing and storage capacities, network speed, and AI/ML model (208) performance, ensuring efficient operation.

### Neural network optimization business flow:

### Discovery and initialization:

- A device that is joining the network the first time generates a DID or retrieves a DID from its storage using a method that is accepted by the DID resolver (103). The DID is used for identifying the device in the network. The DID document, which includes details including public keys, service endpoints, and verification mechanisms, is sent by the device to the DID resolver (103). The DID document is either generated by the device or its manufacturer. The DID resolver (103) forwards the DID to the registry, which checks its uniqueness. If the DID is unique, the DID registry (104) stores the DID document.
- Each device in the network runs a diagnostic to assess its battery/power levels, location, internet speed, processing power and storage capacity, data quality and availability. A DCS is generated as an assessment of the device capabilities. This DCS is recorded on the ledger for transparency and serves as the basis for implementing the relevant neural network optimization strategy.
- A pre-defined, e.g., rule-based, neural network optimization strategy is used to initialize the neural network strategy, which maps DCS ranges with relevant neural network optimization strategies. The 'Optimization Strategy' smart contract is initialized according to the pre-defined neural network strategies. This includes the DCS threshold for calculating the global MPS, which is set to a pre-determined value.
- All nodes are initialized to have the same neural network structure, where a global model is shared via the network with a data sharing protocol.

As an example, for a score range of 0-100, with 0 indicating the lowest and 100 the highest device capability, an initial neural network optimization strategy could be set as score 0-30: do not participate in neural network training or optimization; 30-60: thin neural network; 60-70: maintain existing neural network; 70-90: add layers / widen neural network; 90-100: calculate global model and its score and train global model.

### According to this strategy;

- Devices with the lowest scores, i.e., devices that do not have sufficient storage, processing power, high internet speed, or are located too far away, hence have high latency, would not participate in the optimization or training process.
- Devices with low scores will be required to thin their neural network.
- Devices with an average score would maintain their existing neural network structures.
- Devices with high scores, i.e., high battery levels, high processing power, high storage capacity, located within an epsilon distance of other nodes, high amounts of high-quality data available would add layers to or widen their neural network.
- Devices with the highest scores are dedicated to obtaining the global model, calculating the global MPS, training the global model and distributing the new model with the network.

### Blockchain Coordination:

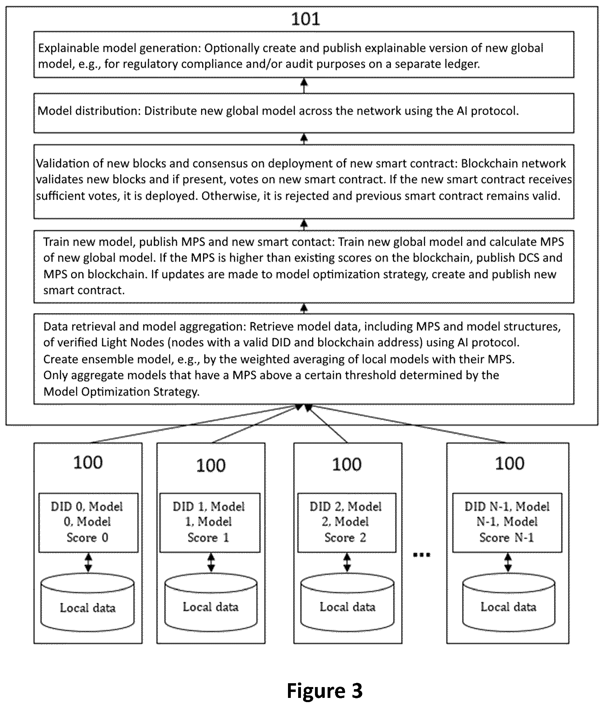

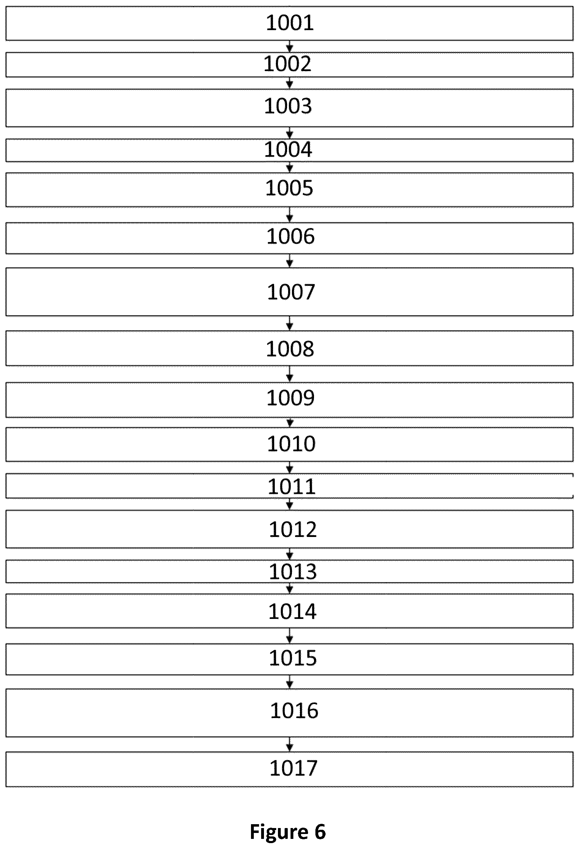

The blockchain acts as a decentralized ledger, ensuring that all neural network optimization strategies and operations are consistent and MPSs verifiable across the network. The blockchain and smart contracts are used for data sharing and collectively managing the neural network optimization strategy in the network; see Figure 6 for neural network optimization blockchain transaction business flow:
- Discovery and initial connection: The device provides its DID to connect to the network. It discovers nodes in the network either by trying to connect to neighboring Light Nodes (100) or Blockchain Nodes (101), or to available Blockchain Nodes (101) specified in a predefined list. To establish a connection, it uses a handshake protocol defined by the Data Transfer Protocol.
- Registration and data provisioning: The Blockchain Node (101), to which the device connects directly or via a Light Node (100), checks whether the device is registered on the blockchain by looking up the DID against the decentralized DID registry (104). If the DID is not found in the registry, the blockchain node (101) creates a public, private key pair for a new DID, then links and stores the association between the DID and public key off-chain. Device information or the association between a device's DID and public key is not stored on the blockchain for privacy reasons. Private keys are not shared across the network but may be shared with the device in a secure way. Based on the device capability, the private key may be used by the device for authentication, encryption/decryption, creating digital signatures, and/or access control purposes. The Blockchain Node (101) provides the unique address of the most recent smart contract and requests a DCS from the node, wherein the bytecode of the algorithm for calculating the DCS or a reference to its location is provided. The node calculates and sends its DCS to the Blockchain Node (101). Based on the most recent strategy for the DCS, the Blockchain Node (101) determines whether the node can participate in model training and optimization. If the node passes the minimum threshold, it transmits the global model to the device using the AI protocol (106). If the device is determined to have a score high enough to be a blockchain node (101), it may be assigned as a blockchain node (101). However, the device may be required to perform a certain number of transactions such as training at least 10 new models with high MPSs before being approved as a blockchain node (101) to ensure it is not malicious and is capable of performing its duties.
- Retrieve model optimization strategy and perform training: The node retrieves the model optimization strategy from the smart contract to determine whether the global model structure needs to be modified before training the model based on its DCS. Raw data available at the device is prepared for model training. The data is then used for training using the model.
- Publish scores: After training the local model, the device shares its DID, MPS and DCS with a Blockchain Node (101). The Blockchain Node (101) verifies the device by checking its DID, then publishes the data as 'Score' and 'Device' blocks, respectively. This is done each time the device updates and trains its neural network model. The two blocks are hashed to create 'Device-Score' blocks. These blocks are stored in the 'Device-Score' ledger. New blocks in a blockchain are created by utilizing the hash value of the preceding block, which serves as a unique digital fingerprint produced by a cryptographic process. This hash value guarantees the integrity and security of the blockchain by connecting each block to its predecessor, thus preventing tampering or modification.
- Update models: The global AI/ML model (208) is updated, which is, e.g., an ensemble of the local models. The ensemble generation could be performed using a method such as weighted averaging of local models, where the MPS is utilized as weights in the weighting process (see Figure 3). Only models that have a MPS that exceeds a threshold determined by the Model Optimization Strategy smart contact is used. Model aggregation is only performed by Blockchain Nodes (101). The global MPS is calculated and published as a regular 'Score' block on the blockchain by the Blockchain Node (101). The 'Score' block is hashed with the devices 'Device' block to create a 'Device-Score' block. Other devices in the network are able to distinguish the global score based on the DCS value in the 'Device-Score' block.
- The 'Optimization Strategy' smart contract is used for collaborating on neural network optimization strategies. It keeps track of the 'Device-Score' ledger. Neural network optimization strategies are updated according to the score data published in the ledger.

### Neural Network Optimization Strategies:

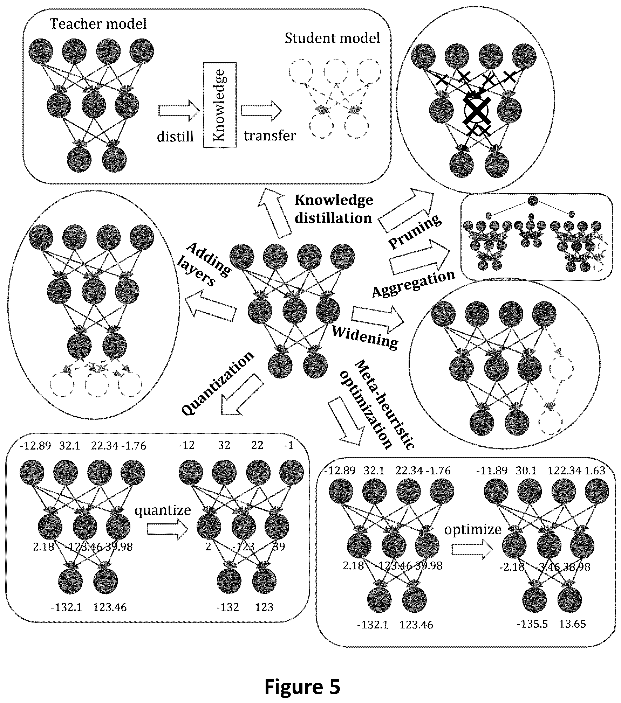

Based on the DCS, different optimization strategies may be implemented (see Figure 5). An example optimization strategy is provided below:
- If the device is below the threshold for performing neural network optimization or training, the device does not participate in the process.
- If the DCS is low, or if the DCS is high and the updated neural network with added layers displays a worse performance than the previous model, apply the following method(s):
   ▪ Pruning
   ▪ Quantization
   ▪ Knowledge Distillation
   ▪ Meta-heuristic Optimization Methods
- If the DCS is high, after initialization phase implement the following method(s):
   • Adding layers
   ▪ Widening
- If the model of a device with a high DCS score was previously updated and the model performance is high, maintain the existing neural network structure.
- If the DCS is above threshold for global model generation, i.e., the node is a Blockchain Node (101), perform the following steps (see Figure 3):
   ▪ Aggregate models: Aggregate local models of other devices using a method such as averaging, where MPSs are used as weights
   ▪ Update model: Update global model and calculate new global MPS
   ▪ Publish new model: If new MPS is higher than previous score and other scores available on the blockchain, publish the new score on the blockchain and distribute the new global model to network
- If the DCS is medium, implement the following method(s):
- If the model performance is low, without changing the size of the neural network, apply model optimization methods such as hyper-parameter tuning, feature selection, meta-heuristic algorithms.
- If the MPS is high, maintain existing neural network structure.
- Re-train the model with new data.

As an example, consider a network security system that incorporates a neural network layer as a component of an intrusion detection system (IDS). The purpose of this IDS is to detect and identify abnormal patterns that could indicate a potential assault on the network or system. Figure 3 is an illustration of a neuron, weight, bias, and activation function in an additional layer of a neural network.
- Neuron: Also known as a node, is a computing unit within a layer that processes signals it receives from the preceding layer. Within the realm of network security, a neuron has the task of examining a particular characteristic of network traffic, such as the size of packets or the frequency of specific requests.
- Weight: Refers to the specific parameters that the neural network acquires and adjusts while undergoing training. They ascertain the intensity of the linkage between two neurons. In this case, a weight can be used to modify the significance of a specific attribute associated with network traffic, such as the count of unsuccessful login attempts within a specified period.
- Bias: A parameter that grants the neuron greater adaptability in representing the data. The intercept term in a linear equation acts as a modifier for the activation function, causing it to shift either to the left or right. In the field of network security, a bias can be employed to modify the output of a neuron without relying on its inputs, thus establishing a fundamental level of activation.
- Activation function: Responsible for determining the activation status of a neuron by evaluating the weighted sum of its inputs and bias. Popular activation functions include Rectified Linear Unit (ReLU), sigmoid, and hyperbolic tangent (tanh). Within a network security system, an activation function such as ReLU can be employed to guarantee that the output of a neuron is positive, perhaps indicating the likelihood of an event being abnormal.

This layer would be a component of a more extensive neural network that comprises input preprocessing, presumably other concealed layers, and an output layer that categorizes network behavior as either normal or potentially harmful. The network would undergo training using previous data that has been categorized as either normal or attack-related. During this process, the network would learn to identify patterns that are indicative of different types of security threats.

It is to be noted that the definition of low, medium and high DCS scores and MPSs may vary based on the implementation and different thresholds, classifications or categorizations may be utilized.

A business flow of new global neural network model generation and distribution, and publishing updates to model optimization strategies are as follows;
- Data retrieval and model aggregation: Retrieve model data, including MPS and model structures, of verified Light Nodes (100) (nodes with a valid DID and blockchain address) using AI protocol (106). Create ensemble model, e.g., by the weighted averaging of local models with their MPS. Only aggregate models that have a MPS above a certain threshold determined by the Model Optimization Strategy.
- Train new model, publish MPS and new smart contact: Train new global model and calculate MPS of new global model. If the MPS is higher than existing scores on the blockchain, publish DCS and MPS on blockchain. If updates are made to model optimization strategy, create and publish new smart contract.
- Validation of new blocks and consensus on deployment of new smart contract: Blockchain network (102) validates new blocks and if present, votes on new smart contract. If the new smart contract receives sufficient votes, it is deployed. Otherwise, it is rejected and previous smart contract remains valid.
- Model distribution: Distribute new global model across the network using the AI protocol (106).
- Explainable model generation: Optionally create and publish explainable version of new global model, e.g., for regulatory compliance and/or audit purposes on a separate ledger.

### AI/ML Model (208) Learning Integration:

- During the AI/ML model (208) learning process, e.g., using federated learning, each device trains a local model using its data. The local models are then updated according to the DCS before being aggregated.
- The global model update is an ensemble of these local models, ensuring that it remains deployable across devices with varying capacities.

Collective Governance and Optimization of Model Optimization Strategies:
- Continuous monitoring: Blockchain nodes (101) continuously monitor network traffic received via the Data Transmission Protocol (107); blockchain data received via the Blockchain Protocol (105) including their MPS, DCS on the blockchain ledger and model optimization strategies in smart contracts; and model data received via the AI protocol (106).
- Data analysis: The blockchain node (101) uses AI algorithms, statistical methods, etc. to perform data analytics on historical blockchain ledger data, smart contracts, real-time blockchain transaction data, network traffic data, etc. to gain insights about the performance of model optimization strategies. For example, an analysis may reveal that widening the model at a node with a DCS of certain value degrades the model performance, and that hyper-parameter optimization is a better strategy.
- Update and deploy new model optimization strategy as a consensus: The Blockchain Node (101) updates the model optimization strategy by publishing a new smart contract. The new smart contract is deployed only after other blockchain nodes (101) in the network verify it as a consensus. This could be achieved, e.g., by a voting mechanism using governance tokens: when a blockchain node (101) that is a token holder verifies the new strategy, e.g., by performing similar data analytics operations, it votes in favor of the new smart contract. If sufficient votes are collected, the new smart contract is deployed. Otherwise, it is rejected and the existing smart contract remains valid.

### Security Measures:

- The neural network optimization process is protected by the inherent security characteristics of DLT, including immutability, cryptographic hashing and consensus procedures.
- The network can collectively detect and prevent anomalies, maliciously altered models, or model poisoning assaults by exchanging abnormal data patterns and modifying the optimization strategy.

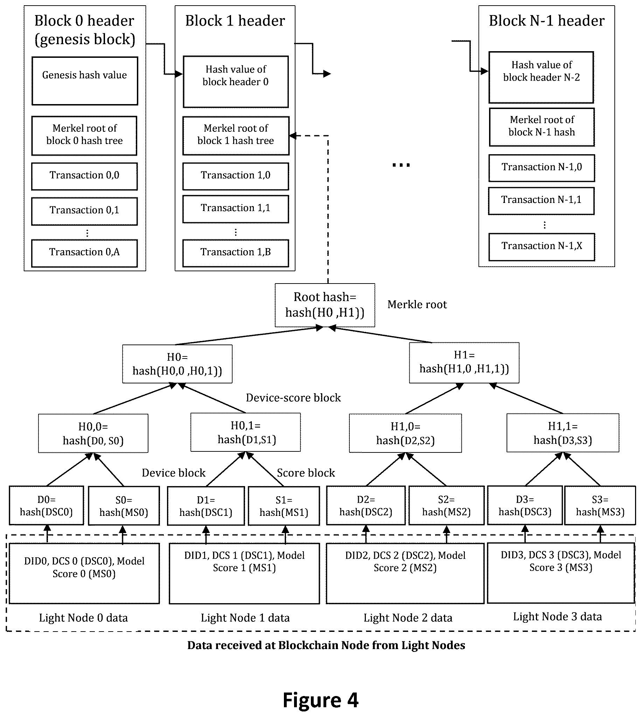

In Figure 4, the blockchain structure, including the connections between blocks and an example Merkle tree structure, of the proposed system is depicted. After a block is validated by a consensus of the blockchain network (102), the new block is added to the chain by referencing the hash value of the block header of the previous block. Each block contains a collection (variable or fixed number) of transactions, where the number of transactions in each block may vary depending on the volume of transactions in the network, transaction fees and blockchain technology utilized. The collection of transactions in a block are organized in a Merkle tree (see Figure 4), which provides a Zero-Knowledge Proof (ZKP) mechanism. ZKP is a cryptographic technique allows the prover to demonstrate to a verifier that a certain statement is true while withholding any information other than the statement's veracity. The objective is to demonstrate ownership of specific knowledge without disclosing the knowledge itself. This makes it possible to demonstrate a transaction's presence in a block without disclosing any other details about it.

The relationship between blockchain transactions, a block and a Merkle tree is as follows:
- A block's transactions are hashed, giving each one a distinct hash value. In the Merkle tree, these hash values are regarded as the leaf nodes. The following level of nodes in the tree is formed by pairing and hashing the leaf nodes together up until there is just one hash remaining, this process is repeated, pairing and hashing the nodes at each level.
- The Merkle root is the name given to this last hash. The blockchain stores only the Merkle root in the block header; all other transactions are hashed and arranged into a Merkle tree. ZKPs use this structure to facilitate effective transaction verification.

The prover can persuade the verifier that they are aware of a transaction that is part of a certain block as follows:
- The prover generates a ZKP rather than disclosing the transaction, which might contain sensitive information.
- The Merkle branch, or the path in the Merkle tree that leads from the transaction to the Merkle root, is part of this evidence. Without disclosing the other transactions in the block, the Merkle branch serves as a proof of inclusion, proving the transaction is part of the block.
- By hashing the transaction and hashes in the Merkle branch and comparing the result with the Merkle root in the block header, the verifier can verify the evidence. If they line up, the evidence is reliable.
- The only thing the verifier discovers about the transaction throughout this phase is that it is a part of the block.

An example Merkle tree structure is depicted in Figure 4. Here, a transaction is a node sharing its local data, DCS and MPS using cryptographic hashing. In this example, in block 1, four devices share their local data with the network. These transactions form a Merkle tree as previously described. This structure allows to securely and efficiently verify the contents of massive data structures. A single transaction in a block can modify its hash, which can change the Merkle root if that transaction is changed. This facilitates the identification of any modifications or interference with the transactions

The score block creation workflow at a blockchain node (101) used in the invention is as follows:
❖ Storing a blockchain ledger in the memory (204) of a blockchain node (101) (1001),
❖ Receiving data from light node(s) (100) including at least model score(s) and/or decentralized identifier(s) (DID(s)) and device capability score(s) via blockchain protocol (105) (1002),
❖ Checking the DID(s) against the decentralized identification registry (1003),
❖ If DID(s) is/are valid and a blockchain address is not yet assigned for the device, creating a new public, private key pair (1004),
❖ Storing the association between the DID(s) and blockchain address (1005),
❖ Provisioning the key pair to the relevant light node (100) (1006),
❖ If DID(s) is/are valid and a blockchain address is already assigned, continue to next step (1007),
❖ Terminating connection with light node(s) (100) if DID(s) is/are invalid (1008),
❖ Generating by the processing device of the blockchain node (101), a device block hash using at least a device capability score hash value included in the device block included in the most recent block (1009),
❖ Generating by the processing device of the blockchain node (101), a new device block including at least the generated device block hash (1010),
❖ Generating by the processing device of the blockchain node (101), a score block hash using at least a model score hash value included in the score block included in the most recent block (1011),
❖ Generating by the processing device of the blockchain node (101), a new score block including at least the generated score block hash (1012),
❖ Generating by the processing device of the blockchain node (101), a device-score block hash using at least a model score hash value included in the device-score block included in the most recent block (1013),
❖ Generating by the processing device of the blockchain node (101), a new device-score block including at least the generated device-score block hash (1014),
❖ Generating by the processing device of the blockchain node (101), a new block header, where generation of the new block header includes generating a new block hash value by hashing the most recent block, generating a new reference hash value by hashing the new device-score block hash (1015),
❖ Generating by the processing device of the blockchain node (101), a new block comprised of the new block header and the new device- score block (1016),
❖ Transmitting by a transmitter of the blockchain node (101), the generated new block to one or more participants associated with the blockchain (1017).

Storing a blockchain ledger in the memory (204) of a blockchain node (101):
The blockchain consists of multiple main blocks, each containing a block header and at least one device-score block, as well as an Optimization Strategy smart contract that governs collective neural network optimization strategies. Each Light Node (100) is assigned a unique blockchain address, which is used in identifying its transactions in a block. The block header includes a timestamp, a reference hash value, and a block hash value. Each Device-Score block consists of at least one Device block and at least one Score block. The most recent block in the blockchain is determined by the timestamp in its block header. The Optimization Strategy smart contract includes code that defines a set of rules for neural network optimization, data regarding the current state of the smart contract and a unique blockchain address that is used as an identifier to interact with the smart contract.

The processes performed with the invention are briefly as follows;

### Discovery and device registration:

A device that wants to join the network for the first time sends a 'Hello' message to neighbor nodes in the network using the data transmission protocol (107). The device either generates a DID using the public key of a public, private key pair it generates using its generation module (211) and stores locally on its database or memory (204) or retrieves a pre-provisioned DID from its database using a method that is acceptable by the DID resolver (103). The DID document includes details such as the public key, service endpoints, and verification mechanisms.

In one embodiment, the device sends the DID document directly to the DID resolver (103), e.g., using a pre-set address or URL of a DID resolver (103). This configuration may be included in the device's settings or integrated into an application. The device then sends a 'Hello' message that includes its DID.

In another embodiment, a neighbor node (Light Node (100)/ Blockchain Node (101)) may request a unique identifier such as a DID from the device using the querying module (213) and data transmission protocol (107) in order to identify and verify the device. The neighbor node forwards the DID to the DID resolver (103) to resolve the DID.

The DID resolver (103) forwards the DID document to the DID registry (104), which checks its uniqueness. If the DID is unique, the DID registry (104) stores the DID document. The DID registry (104) sends the DID document to the DID resolver (103), which then forwards the DID document to the requestor (device or neighbor node). The device is hence now registered and can use its DID to connect to other nodes in the blockchain network (102).

**Connection:** The device requests to connect to a neighbor node using the data transmission protocol (107), where it includes its DID. The neighbor node requests to verify the device using the querying module (213) and the DID resolver (103) (DID resolver (103) forwards the DID to the DID registry (104), which checks whether the DID document exists. If it exists, the DID registry (104) sends the DID document to the resolver, which forwards it to the neighbor node.

If the neighbor node is a light node (100), then it requests the device's DCS via a blockchain node (101). Otherwise, if the neighbor node is a blockchain node (101), it accesses the blockchain ledger in its blockchain database (203) to look up the DCS.
- If the DCS of the device is not available on the blockchain ledger in a the blockchain node's (101) blockchain database (203), or has expired (the date at which the last DCS was created exceeds a pre-determined time limit) the blockchain node (101) either responds with a request to gather the DCS either directly to the device or via to the light node (100), which forwards the request to the device. The request, e.g., may contain a link or URL endpoint to the algorithm for calculating the DCS. The device gathers the data needed for calculating the score using its querying module (213) and communications module (205). For this purpose, the device, e.g., may run a diagnostic test to assess its battery/power levels, location, internet speed, processing power and storage capacity, data quality and availability. The device then stores the gathered data in its memory (204). If needed, it transforms the data into the relevant format using its processing module (214). It then generates the score using its generation module (211) and stores it in its device database (200). The device then sends the DCS to the neighbor node.
- If the DCS exists in the blockchain ledger of the blockchain node's (101) blockchain database (203) and is still valid (has not expired), the blockchain node (101) retrieves the score using the blockchain module (207) and sends it to the neighbor node that made the request.

**Device assessment:** The blockchain node (101) associates the DCS to the device's DID and adds the DCS in a new device block (see Figure 4) using the blockchain module (207) and blockchain protocol (105).
- If the device has a DCS below the threshold required for being a light node (100), it is identified as non-participant device and is excluded from model training and optimization.
- If the device has a DCS sufficient to be a light node (100) but below the threshold required for being a blockchain node (101), it is defined as a light node (100).
- If the device has a sufficient DCS required for being a blockchain node (101), it is defined as a blockchain node (101).

The device category is published together with the DCS in the device block using blockchain module (207). It is to be noted that both the DCS and device category of a device may change over time, depending on data used in the calculation of the DCS.

**Model provisioning:** For devices with a device category of light node (100), the blockchain node (101) retrieves and provisions the global neural network model from its model database (201) to the light node (100) via the AI protocol (106) and transmitting device (215). If the device is a blockchain node (101), it requests local models from neighboring light nodes (100) using the AI protocol (106) and receiving device (216) if their MPSs exceed the threshold determined by the optimization strategy smart contact, which it determines using the blockchain module (207) and collective optimization module (206) (see Figure 3 for business flow).

**Model generation:** The light node (100) / blockchain node (101) retrieves the relevant neural network optimization strategy (see figure 5) from the optimization smart contract. The light node (100) / blockchain node (101) executes the relevant strategy on the model(s) and stores the new model in the model database (201).

**Data preparation and model training:** If the model optimization strategy includes model training, perform the following steps:
The light node (100) or blockchain node (101) prepares its local, raw data for training the model, and stores it in its AI/ML dataset (202) as the training dataset. The node then trains the model with the training dataset using the AI/ML module (208).

**MPS calculation and publishing:** The light node (100) or blockchain node (101), evaluates the performance of the model using its test dataset it retrieves from AI/ML dataset (202) and performance metrics that it retrieves from its model database (201). It calculates the MPS based on the algorithm provided in the Optimization Strategy smart contract. The light node (100) or blockchain node (101) stores the score in its model database (201) and publishes the MPS as a score block (see Figure 6 for business flow). If it is a blockchain node (101), and if its MPS has a higher score than that of all existing models in the network, it distributes the new global model to the network via the AI protocol (106). Optionally, it creates and stores an explainable version of the new global model using its AI/ML module (208). It also optionally publishes it using blockchain module (207) and blockchain protocol (105) on a separate ledger (see Figure 3 for business flow).

**Continuous Monitoring, Data Analytics and Model Optimization Strategy Updates:** The performance of the models across the network are continuously monitored by blockchain nodes (101) using the monitoring agent (209). Blockchain nodes (101) use the AI/ML module (208) and security module (210) to perform data analytics on historical blockchain ledger data, real-time blockchain transaction data, network traffic data, etc. to gain insights about the performance of model optimization strategies including security threats such as model poisoning attacks. For example, an analysis may reveal that widening the model at a node with a DCS of a certain value degrades the model performance, and that hyper-parameter optimization is a better strategy. The blockchain node (101) updates the model optimization strategy by publishing a new optimization strategy smart contract using the blockchain protocol (105), the blockchain module (207) and transmitting device (215).

**Consensus on and Deployment of New Model Optimization Strategy Smart Contract:** The Blockchain network (102) verifies the new smart contract as a consensus, where each blockchain node (101) in the blockchain network (102) utilizes its own blockchain module (207) for submitting its individual decision. This could be achieved, e.g., by a voting mechanism using governance tokens: when a blockchain node (101) that is a token holder verifies the new strategy, e.g., using its verification module (212) and by performing similar data analytics operations using the AI/ML module (208), it votes in favor of the new smart contract using the blockchain module (207) and blockchain protocol (105).
- If sufficient votes are collected, the new smart contract is deployed.
- Otherwise, it is rejected and the existing smart contract remains valid.

The business flows of the invention are described below:

### Discovery and device registration

An unregistered device must first discover the network and register itself in the blockchain network (102) by following the steps below. Device registration is only performed once.

A device that wants to join the network for the first time sends a 'Hello' message to neighbor nodes in the network using the Data Transmission Protocol (107). The device either generates a DID using the public key of a public, private key pair it generates using its Generation Module (211) and stores locally on its database or memory (204) or retrieves a pre-provisioned DID from its database using a method that is acceptable by the DID Resolver (103). The DID document includes details such as the public key, service endpoints, and verification mechanisms.
- In one embodiment, the device sends the DID document directly to the DID Resolver (103), e.g., using a pre-set address or URL of a DID Resolver (103). This configuration may be included in the device's settings or integrated into an application. The device then sends a 'Hello' message that includes its DID.
- In another embodiment, a neighbor node (Light Node 100/ Blockchain Node (101) may request a unique identifier such as a DID from the device using the Querying Module (213) and Data Transmission Protocol (107) in order to identify and verify the device. The neighbor node forwards the DID to the DID Resolver (103) to resolve the DID.

The DID Resolver (103) forwards the DID document to the DID Registry (104), which checks its uniqueness. If the DID is unique, the DID Registry (104) stores the DID document. The DID Registry (104) sends the DID document to the DID Resolver (103), which then forwards the DID document to the requestor (device or neighbor node). The device is hence now registered and can use its DID to connect to other nodes in the Blockchain Network (102).

A registered device can use its DID to connect to other nodes in the Blockchain Network (102) as follows:
- The device requests to connect to a neighbor node using the Data Transmission Protocol (107), where it includes its DID.
- The neighbor node requests to verify the device using the Querying Module (213) and the DID Resolver (103) (DID Resolver (103) forwards the DID to the DID Registry (104).
- The DID Resolver (103) checks whether the DID document exists in the DID Registry (104).
- The DID Registry (104) sends the DID document to the resolver, if it exists. If it does not exist, it may respond with an error or null response.
- The DID Resolver (103) responds to the request of the neighbor node with the DID document or error response.
- The neighbor node checks whether the DID document is received using its Verification Module (212). If not, it responds to the device with an error and terminates the connection. Otherwise, it continues to the next step.
- Request DCS:
   a. If the neighbor node is a Light Node (100), then it requests the device's DCS via a Blockchain Node (101).
   b. If the neighbor node is a Blockchain Node (101), it accesses the blockchain ledger in its Blockchain Database (203) to look up the DCS.
- Obtain DCS:
   a. If the DCS of the device is not available on the blockchain ledger in a the Blockchain Node's (101) Blockchain Database (203), or has expired (the date at which the last DCS was created exceeds a pre-determined time limit) the Blockchain Node (101) either responds with a request to gather the DCS either directly to the device or via to the Light Node (100), which forwards the request to the device. The request, e.g., may contain a link or URL endpoint to the algorithm for calculating the DCS.
      i. The device gathers the data needed for calculating the score using its Querying Module (213) and Communications Module (205). For this purpose, the device, e.g., may run a diagnostic test to assess its battery/power levels, location, internet speed, processing power and storage capacity, data quality and availability.
      ii. The device stores the gathered data in its Memory (204).
      iii. If needed, the device transforms the data into the relevant format using its Processing Module (214). It then generates the score using its Generation Module (211) and stores it in its Device Database (200). The device then sends the DCS to the neighbor node.
   b. If the DCS exists in the blockchain ledger of the Blockchain Node's (101) Blockchain Database (203) and is still valid (has not expired), the Blockchain Node (101) retrieves the score using the Blockchain Module (207) and includes the score in the response to the neighbor node's request.
- The Blockchain Node (101) associates the DCS to the device's DID and adds the DCS in a new Device block (see Figure 4) using the Blockchain Module (207) and Blockchain Protocol (105).
   a. If the device has a DCS below the threshold required for being a Light Node (100), it is identified as non-participant device and is excluded from model training and optimization.
   b. If the device has a DCS sufficient to be a Light Node (100) but below the threshold required for being a Blockchain Node (101), it is defined as a Light Node (100).
   c. If the device has a sufficient DCS required for being a Blockchain Node (101), it is defined as a Blockchain Node (101).
- The Device Category is published together with the DCS in the Device block using the Blockchain Module (207).
- The Blockchain Node (101) responds to the Light Node (100) with its Device Category information.
- The Light Node (100) stores the Device Category information in its Device Database (200).

It is to be noted that both the DCS and Device Category of a device may change over time, depending on data used in the calculation of the DCS.

After the Device Category of a device is determined by a Blockchain Node (101), the device may engage in collective AI optimization activities including model optimization, training and performance evaluation.
- The device receives the model data and its optimization strategy as follows:
   a. If the device has a Device Category of Light Node (100), the Blockchain Node (101) retrieves and provisions the global neural network model from its Model Database (201) to the Light Node (100) via the AI Protocol (106) and Transmitting Device (215).
   b. If the device is a Blockchain Node (101), it requests local models from neighboring Light Nodes (100) using the AI Protocol (106) and Receiving Device (216) if their MPSs exceed the threshold determined by the Optimization Strategy smart contact, which it determines using the Blockchain Module (207) and Collective Optimization Module (206) (see Figure 3 for business flow).
   c. If the device is a non-participant node, it may not participate in collective AI optimization activities.
- The Light Node (100) / Blockchain Node (101) retrieves the relevant neural network optimization strategy (see Figure 5) from the Optimization Smart Contract and executes the relevant strategy on the model(s). It then stores the new model in the Model Database (201).
- The Light Node (100) / Blockchain Node (101) performs the following steps for evaluating the performance of the model:
   a. Gather data and store as raw dataset in the AI/ML Dataset (202) database.
   b. Pre-process data to prepare it for training or testing the model.
   c. If the model optimization strategy includes model training:
      i. Split data into test and training data, and store them separately in the AI/ML Dataset (202) database as the training dataset and test dataset.
      ii. Train the model with the training dataset using the AI/ML Module (208).
      Otherwise store the entire pre-processed data as the test dataset in the AI/ML Dataset (202) database.
   d. Evaluate the performance of the model using its test dataset stored in the AI/ML Dataset (202) and performance metrics that it retrieves from its Model Database (201).
- The Light Node (100) / Blockchain Node (101) calculates the MPS based on the algorithm provided in the Optimization Strategy smart contract and stores the score in its Model Database (201).
- The Light Node (100) / Blockchain Node (101) publishes the MPS as a Score block (see Figure 6 for business flow).
- If the device is a Blockchain Node (101), and if its MPS has a higher score than that of all existing models in the network, it distributes the new global model to the network via the AI Protocol (106). Optionally, it also creates and stores an explainable version of the new global model using its AI/ML Module (208) and publishes it using the Blockchain Module (207) and Blockchain Protocol (105) on a separate ledger (see Figure 3 for business flow).

After at least one global model is distributed across the Blockchain Network (102) and at least one MPS is received from the network nodes, a Blockchain Node (101) performs the following steps for updating the model optimization strategy:
- The performance of the models across the network are continuously monitored by Blockchain Nodes (101) using the Monitoring Agent (209).
- Blockchain Nodes (101) use the AI/ML Module (208) and Security Module (210) to perform data analytics on historical blockchain ledger data, real-time blockchain transaction data, network traffic data, etc. to gain insights about the performance of model optimization strategies including security threats such as model poisoning attacks. For example, an analysis may reveal that widening the model at a node with a DCS of a certain value, e.g., 60 out of 100, degrades the model performance, and that hyper-parameter optimization is a better strategy.
- The Blockchain Node (101) updates the model optimization strategy by publishing a new Optimization Strategy smart contract using the Blockchain Protocol (105), the Blockchain Module (207) and Transmitting Device (215).
- The Blockchain Network (102) verifies the new smart contract as a consensus, where each Blockchain Node (101) in the Blockchain Network (102) utilizes its own Blockchain Module (207) for submitting its individual decision. This could be achieved, e.g., by a voting mechanism using governance tokens: when a Blockchain Node (101) that is a token holder verifies the new strategy, e.g., using its Verification Module (212) and by performing similar data analytics operations using the AI/ML Module (208), it votes in favor of the new smart contract using the Blockchain Module (207) and Blockchain Protocol (105).
   a. If sufficient votes are collected, the new smart contract is deployed.
   b. Otherwise, it is rejected and the existing smart contract remains valid

### References

[1] Kundjanasith Thonglek, Keichi Takahashi, Kohei Ichikawa, Hajimu lida, Chawanat Nakasan, "Federated Learning of Neural Network Models with Heterogeneous Structures," 2020 19th IEEE International Conference on Machine Learning and Applications (ICMLA), Miami, FL, USA, 2020, pp. 735-740.
[2] J. Yu, J. A. Vincent and M. Schwager, "DiNNO: Distributed Neural Network Optimization for Multi-Robot Collaborative Learning," in IEEE Robotics and Automation Letters, vol. 7, no. 2, pp. 1896-1903, April 2022.
[3]X. Liang, A. M. Javid, M. Skoglund and S. Chatterjee, "Distributed Large Neural Network with Centralized Equivalence," 2018 IEEE International Conference on Acoustics, Speech and Signal Processing (ICASSP), Calgary, AB, Canada, pp. 2976-2980, 2018.
[4]Scardapane S, Di Lorenzo P., "A framework for parallel and distributed training of neural networks. Neural Networks," vol.91, pp. 42-54, July 2017.
[5]Moreno-Alvarez S, Paoletti ME, Cavallaro G, Haut JM. "Enhancing Distributed Neural Network Training Through Node-Based Communications," IEEE Transactions on Neural Network Learning Systems, Sep 18, 2023.
[6]S. Oliker, M. Furst, O. Maimon. "A Distributed Genetic Algorithm for Neural Network Design and Training. Complex Systems," vol 6, pp. 459-477, 1992.
[7]P. Guan and X. Li, "Minimizing Distribution Cost of Distributed Neural Networks in Wireless Sensor Networks," IEEE GLOBECOM 2007 - IEEE Global Telecommunications Conference, Washington, DC, USA, 2007, pp. 790-794.
[8]Z. Cheng, L. Gao, "Learning with Collaborative Neural Network Group by Reflection," arXiv, 2018.
[9]G. Song and W. Chai, "Collaborative Learning for Deep Neural Networks," in Proceedings of the 33rd Conference on Neural Information Processing Systems (NeurIPS 2018), Montréal, Canada, Dec. 2018.

## Claims

1. A system that is used artificial intelligence, distributed computing, energy efficiency, optimization, cybersecurity, privacy field and relates to a decentralized system that not only optimizes neural networks for devices with varying capacities but also provides a robust defense mechanism against cybersecurity and privacy threats and **characterized by** comprising;
• Light node (100) that can perform local model training, execute neural network optimization strategies locally, publish MPSs via a blockchain node (101), query MPSs and receive neural network updates, depending on the optimization strategy determined for their DCS and can depend on blockchain nodes (101) for information and validation functions, can participate in limited or no neural network training or optimization, and can submit their DCS and verify blockchain transactions by downloading block headers,
• Blockchain node (101) that manages all blockchain related activities by engages in the blockchain network (102),
• Blockchain network (102) that is a decentralized database or ledger and collectively maintained by the light nodes (100) and/or blockchain nodes (101) of a computer network,
• DID resolver (103) which connects to blockchain network (102) nodes including light nodes (100) and blockchain nodes (101) and to either resolve or verify a DID that was generated by the node using an accepted method,
• DID registry (104) which stores DID documents, which includes crucial details including public keys, service endpoints, and verification mechanisms and responds to DID resolver (103) requests,
• Blockchain protocol (105) which defined set of rules that dictate the functioning of the blockchain network (102), including the definition of the data structure, transaction processing and verification rules, and communication between network nodes, including light nodes (100),
• AI protocol (106) that facilitates the collective training and optimization of AI/ML models (208) by several nodes while ensuring that the data remains decentralized and private,
• Data transmission protocol (107) which is a predefined set of rules that govern the process of transmitting data between various devices inside the blockchain network (102), that enables light nodes (100) to exchange information with each other and blockchain nodes (101), irrespective of any variations in their internal operations, composition, or configuration and that establishes the structure, timing, order, and error-detection techniques necessary for dependable and protected data interchange,
• Device database (200) in the blockchain node (101) server that stores device data, including at least DCS data,
• Model database (201) in the blockchain node (101) server that stores model data including at least AI/ML models (208) and algorithms, optimization algorithms, MPSs, model parameters and hyperparameters, loss function and evaluation metrics,
• AI/ML dataset (202) in the blockchain node (101) server that stores data needed for AI/ML model (208) training and optimization, including at least raw data, labeled data, test and training datasets,
• Blockchain database (203) that comprises data related to blockchain transactions, including at least the device-score blockchain ledger, smart contract data including code, blockchain address and state information,
• Memory (204) that is temporary storage of the blockchain node (101) server where data such as network data, optimization strategy data, security logs, etc. are stored,
• Communications module (205), which is responsible for all internal communication on blockchain node (101),
• Collective optimization module (206), which performs neural network optimization of neural network structures using a collection of optimization techniques and strategies, such as collective optimization strategies, feature optimization, pruning, quantization, knowledge distillation, adding layers, widening, re-training, meta-heuristic algorithms, stochastic gradient descent, adaptive gradient methods optimization algorithms,
• Blockchain module (207), which manages all blockchain related activities, including at least the publishing and validation of device, score and device-score blocks, managing the smart contracts using a blockchain protocol (105),
• AI/ML module (208), which performs all AI and data analytics activities in the system, including at least model generation and optimization, and anomaly detection and works together with the collective optimization module (206), security module (210) and monitoring agent (209),
• Monitoring agent (209), which performs the real-time assessment of device and network resources and AI/ML model (208) performance and utilizes model performance metrics stored in the model database (201),
• Security module (210), which performs all security and privacy related operations in the node by utilizing data obtained from the blockchain protocol (105), AI protocol (106) and data transmission protocol (107) via the receiving device (216) and transmitting device (215), including network traffic, blockchain and AI/ML model (208) data to identify and prevent model poisoning, thereby guaranteeing the authenticity and dependability of collaborative AI/ML model (208) optimization and training,
• Generation module (211), which is responsible for generating of new data, such as MPS, DCS, AI/ML models (208) or simulations and analysing data from the distributed ledger, local data stored on the node's database(s) device database (200), model database (201), ai/ml dataset (202), blockchain database (203), memory (204), incoming network traffic data, etc. while also ensuring compliance with the blockchain protocol (105), AI protocol (106) and data transmission protocol (107);
• Verification module (212), which performs all verification functionalities in the system including data verification, request verification, user identity or device verification,
• Querying module (213), which is responsible for using all queries including at least blockchain related requests from light nodes (100) and the blockchain node (101) internal requests, extracting pertinent data from databases and memory (204), and delivering the results back to the blockchain node (101),
• Processing module (214), which performs all processing activities in the system, including data processing, image processing,
• Transmitting device (215) that transmits data to external systems,
• Receiving device (216) that receives external signals sent to the node.

2. A method that is used artificial intelligence, distributed computing, energy efficiency, optimization, cybersecurity, privacy field and relates to a decentralized system that not only optimizes neural networks for devices with varying capacities but also provides a robust defense mechanism against cybersecurity, privacy threats and **characterized by** comprising following process steps;
• Performing of the discovery and initial connection process,
• Registration and data provisioning,
• Retrieving of model optimization strategy and performing training,
• Publishing of scores,
• Updating of models.

3. The method according to claim 2, process to performing of the discovery and initial connection, **characterized by** comprising following process steps;
• providing its DID to connect to the network by device,
• trying to connect to neighboring light nodes (100) or blockchain nodes (101), or to available blockchain nodes (101) specified in a predefined list, by discovering nodes in the network,
• using a handshake protocol defined by the data transfer protocol to establish a connection.

4. The method according to claim 2, process to registration and data provisioning, **characterized by** comprising following process steps;
• checking whether the device is registered on the blockchain by looking up the DID against the decentralized DID registry (104) by the blockchain node (101), to which the device connects directly or via a light node (100),
• If the DID is not found in the registry, creating a public, private key pair for a new DID by the blockchain node (101), then linking and storing the association between the DID and public key off-chain,
• providing the unique address of the most recent smart contract and requesting a DCS from the node by the blockchain node (101),
• calculating and sending DCS to the blockchain node (101) by the node,
• determining whether the node can participate in model training and optimization by the blockchain node (101),
• If the node passes the minimum threshold, transmitting of the global model to the device using the AI protocol (106),
• If the device is determined to have a score high enough to be a blockchain node (101), assigning as a blockchain node (101).

5. The method according to claim 2, process to retrieving of model optimization strategy and performing training, **characterized by** comprising following process steps;
• retrieving the model optimization strategy from the smart contract to determine whether the global model structure needs to be modified before training the model based on its DCS,
• preparing of raw data available at the device for model training,
• using of the data for training the model.

6. The method according to claim 2, process to publishing of scores, **characterized by** comprising following process steps;
• sharing device's DID, MPS and DCS with a blockchain node (101) after training the local model,
• Verifying the device by checking its DID by Blockchain Node (101), then publishing the data as 'Score' and 'Device' blocks respectively,
• hashing to create 'Device-Score' blocks,
• storing the blocks in the 'Device-Score' ledger.

7. The method according to claim 2, process to updating of models, **characterized by** comprising following process steps;
• updating the global AI/ML model (208) which is an ensemble of the local models,
• calculating and publishing the global MPS as a regular 'Score' block on the blockchain by the blockchain node (101),
• hashing the 'Score' block with the devices 'Device' block to creating a 'Device-Score' block.

8. The method according to claim 7, process to the score block creation workflow at a blockchain node (101), **characterized by** comprising following process steps;
• Storing a blockchain ledger in the memory (204) of a blockchain node (101),
• Receiving data from light node(s) (100) including at least model score(s) and/or decentralized identifier(s) (DID(s)) and device capability score(s) via blockchain protocol (105),
• Checking the DID(s) against the decentralized identification registry,
• If DID(s) is/are valid and a blockchain address is not yet assigned for the device, creating a new public, private key pair,
• Storing the association between the DID(s) and blockchain address,
• Provisioning the key pair to the relevant light node (100),
• If DID(s) is/are valid and a blockchain address is already assigned, continue to next step,
• Terminating connection with light node(s) (100) if DID(s) is/are invalid,
• Generating by the processing device of the blockchain node (101), a device block hash using at least a device capability score hash value included in the device block included in the most recent block,
• Generating by the processing device of the blockchain node (101), a new device block including at least the generated device block hash,
• Generating by the processing device of the blockchain node (101), a score block hash using at least a model score hash value included in the score block included in the most recent block,
• Generating by the processing device of the blockchain node (101), a new score block including at least the generated score block hash,
• Generating by the processing device of the blockchain node (101), a device-score block hash using at least a model score hash value included in the device-score block included in the most recent block,
• Generating by the processing device of the blockchain node (101), a new device-score block including at least the generated device-score block hash,
• Generating by the processing device of the blockchain node (101), a new block header, where generation of the new block header includes generating a new block hash value by hashing the most recent block, generating a new reference hash value by hashing the new device-score block hash,
• Generating by the processing device of the blockchain node (101), a new block comprised of the new block header and the new device- score block,
• Transmitting by a transmitter of the blockchain node (101), the generated new block to one or more participants associated with the blockchain.

9. A method that is used artificial intelligence, distributed computing, energy efficiency, optimization, cybersecurity, privacy field and relates to a decentralized system that not only optimizes neural networks for devices with varying capacities but also provides a robust defense mechanism against cybersecurity, privacy threats and if a device that is joining the network the first time; discovery and initialization process of neural network optimization **characterized by** comprising following process steps;
• generating a DID or retrieving a DID from its storage using a method that is accepted by the DID resolver (103) if a device that is joining the network the first time,
• sending a DID document, which includes details including public keys, service endpoints, and verification mechanisms, by the device to the DID resolver (103),
• forwarding the DID to a DID registry (104) which checks its uniqueness by the DID resolver (103),
• storing the DID document by the DID registry (104) if the DID is unique,
• running a diagnostic to assess its battery/power levels, location, internet speed, processing power and storage capacity, data quality and availability to each device in the network,
• generating a DCS as an assessment of the device capabilities and recording of the DCS on the ledger for transparency and serving as the basis for implementing the relevant neural network optimization strategy,
• using of a pre-defined, e.g., rule-based, neural network optimization strategy to initialize the neural network strategy, which maps DCS ranges with relevant neural network optimization strategies,
• initializing of all nodes to have the same neural network structure, where a global model is shared via the network with a data sharing protocol.
